# EUROPEAN PATENT APPLICATION

(11) **EP 2 306 216 A1**
(43) Date of publication of application: **06.04.2011**
(21) Application number: 09275089.2
(22) Date of filing: 30.09.2009
(51) Int. Cl.: G01S 1/04, G01S 1/00, G01S 5/14

(54) **Positioning system**

(71) Applicant: Astrium Limited, Stevenage, Hertfordshire SG1 2AS (GB)
(72) Inventor: Morrisson, Russell Gavin, Portsmouth Hampshire, PO3 5PU (GB); Dixon, Charles Stephen Dr., Portsmouth Hampshire, PO3 5PU (GB)
(74) Representative: Bruce, Alexander Richard Henry

(57) **Abstract**

A positioning system (1) comprises a plurality of pseudolites (2) each comprising a transmitter (6) and configured to broadcast a transmission. The transmission includes positioning data (46,48,50) usable by a receiver (5) to calculate position; and communications message data (54) comprising information to be output to a user of the receiver (5). The communications message data (50) is not related to calculating position.

## Description

The present invention relates to a positioning system, in particular, a positioning system using a network of pseudolites.

Satellite based positioning systems, in particular the Global Positioning System (GPS), provide a well known means for determining the position of a receiver. Signals from the satellites may be blocked by the receiver's surroundings, for example, by tall buildings. Degradation of positioning accuracy may occur due to reflections of the satellite signal or multipath propagation.

It is known to use pseudo-satellites, or pseudolites, in addition to satellites, for example as described in US 5,686,924. Pseudolites are typically at fixed positions on the ground or on fixed structures, and mimic satellite navigation transmissions. Such pseudolites can improve positioning of a receiver in a local area.

A user in the local area will receive an accurate position of their receiver. Knowledge of the position may enable the user to navigate to a pre-determined destination point. However, navigation to a pre-determined point may not be possible due to the presence of third parties or a recent change in the situation in the local area. Alternatively, the destination point may not be pre-determined, and require communication, for example by radio, with a controller.

The present invention provides, in a first aspect, a positioning system comprising: a plurality of pseudolites each comprising a transmitter and configured to broadcast a transmission, the transmission including: positioning data usable by a receiver to calculate position; and communications message data comprising information to be output to a user of the receiver, wherein the communications message data is not related to calculating position.

Thus, a pseudolite system can provide positioning data, and in addition, information assisting with navigation.

Preferably, the transmission is formed by a series of super frames, wherein the positioning data is arranged in frames within the super frames, and wherein at least one of said super frames is configured to include the communications message data arranged in at least one frame.

Preferably, the pseudolites are configured to broadcast the transmission as two side sub-band signals, wherein the communications message data is transmitted on only one of the side sub-band signals.

The present invention provides, in a second aspect, a method of transmitting data to a receiver in a positioning system, comprising: broadcasting transmissions from a plurality of pseudolites, the transmissions including: positioning data usable by a receiver to calculate position; and communications message data comprising information to be output to a user of the receiver, wherein the communications message data is not related to calculating position.

The present invention provides, in a third aspect, a positioning system comprising:
a plurality of pseudolites each comprising a transmitter and configured to broadcast a transmission modulated with a pseudorandom (PRN) code; wherein the transmission includes an almanac comprising identifiers for identifying the PRN codes of the pseudolites in the positioning system, and wherein the almanac does not include location information for determining the approximate location of the pseudolites.

Preferably, the transmission by a said pseudolite further includes an ephemeris comprising precise location information for determining the precise location of the said pseudolite.

Preferably, the precise location information uses a Cartesian coordinate system to define the precise location of the pseudolites, and preferably uses an Earth Centred Earth Fixed Coordinate system to define the precise location of the pseudolites.

Preferably, the transmission is formed by a series of super frames, wherein the almanac is arranged in frames within the super frames.

Preferably, the transmission comprises positioning data including at least two of Ephemeris data, Almanac data and timing data, defining different types of positioning data, wherein frames of a type of positioning data are separated by a frame of a different type of positioning data within said super frame.

Preferably, the pseudolites are configured to broadcast the transmission as two side sub-band signals.

Preferably, the transmission is on a Galileo E5 frequency based on the GIOVE-B Signal-In-Space Interface Specification Draft 0, 23 May 2006, and the first side sub-band signal is an E5a signal, and the second side sub-band signal is an E5b signal.

Preferably, a control station is connected to the plurality of pseudolites by a communications link.

Preferably, the transmission of each pseudolite comprises timing data defining a timing offset relative to a reference time, wherein the reference time is provided by an internal clock of one of said pseudolites.

The present invention provides, in a forth aspect, a method of transmitting data to a receiver in a positioning system, comprising: broadcasting a transmission modulated with a pseudorandom (PRN) code; wherein the transmission includes an almanac comprising identifiers for identifying the PRN codes of the pseudolites in the positioning system, and wherein the almanac does not include location information for determining the approximate location of the pseudolites.

The present invention will now be described, by way of example only, with reference to the accompanying drawings, in which:
Figure 1 is a schematic overview of the system according to the present invention;
Figure 2 is a schematic view of part of a pseudolite according to the present invention; and
Figure 3 is a schematic view of an embodiment of the message structure used by a pseudolite according to the present invention.

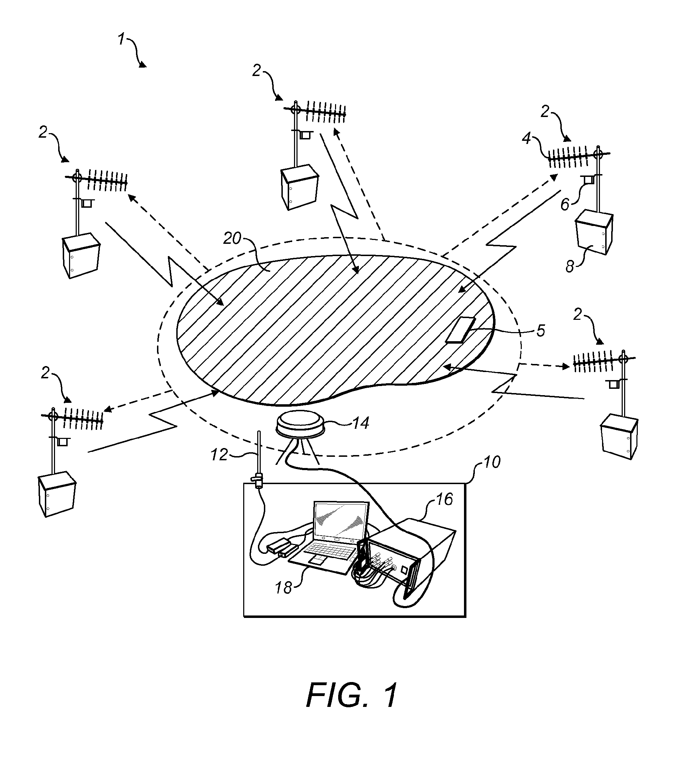

Figure 1 shows a pseudolite system 1 according to the present invention. The pseudolite system 1 comprises at least one pseudolite 2, and preferably more than one remotely located pseudolites 2. The system preferably includes between two and ten pseudolites, and Figure 1 shows five pseudolites as an example only. The pseudolites 2 are arranged to transmit positioning signals to a user receiver 5 in a defined area 20.

The area 20 may be several kilometres in extent. The area 20 may include a harbour, port, airport, railway, road or any area where reliability and/or accuracy of positioning of the user receiver 5 is to be increased. In particular, the pseudolite system 1 may be used in a critical situation area where safety of life and/or continuity of high-quality system performance are required. The pseudolite system 1 may also be used in a difficult environment, including situations where Global Navigation Satellite System (GNSS) signals may become blocked by local obstructions, including urban canyons and indoor operations among other environments. The pseudolites are mounted on existing structures or the ground in or around the area 20.

The system 1 further includes a monitoring and control station 10. A communications link exists between the monitoring and control station 10 and each pseudolite 2, which allows for data to be exchanged between the monitoring and control station 10 and each pseudolite 2. The monitoring and control station 10 may be remote from the pseudolites 2, or may be co-located with a pseudolite 2.

The pseudolites 2 are transmit stations each having a transmitter 6 configured to transmit positioning signals resembling positioning signals transmitted by a satellite positioning system. The position of each pseudolite antenna 6 is accurately surveyed in the GPS coordinate system and is transmitted to the user receiver 5. In particular, the pseudolites 2 transmit signals corresponding to the structure used by the Galileo satellite system. Preferably, the transmission signal uses the Galileo E5 Alt-BOC signal structure. The positioning signals may be transmitted continuously or in pulses. In addition, the pseudolites 2 each have an aerial 4 for receiving data from, and optionally transmitting data to, the Monitoring and Control station 10, forming part of the communications link.

Each pseudolite 2 has a processing unit 8, which includes a clock provided by a local oscillator. Each pseudolite in the system is remote and uses its own oscillator for timing reference The clock preferably uses an ovenised crystal oscillator (OCXO). Such an oscillator has the advantage of being relatively inexpensive. However, a crystal oscillator is not as accurate as an atomic clock used in a satellite. For example, a Global Positioning System (GPS) uses a Rubidium and Caesium atomic clock, and the Galileo system uses a Hydrogen Maser and Rubidium atomic clock.

The monitoring and control station 10 includes a processing unit 18. The processing unit 18 is configured to generate synchronisation data for ensuring the pseudolites 2 are synchronised to each other and/or to an external reference. The monitoring and control station 10 includes an antenna 12 connected to the processing unit 18, and configured to transmit data to, and receive data from, the pseudolites 2. The monitoring and control station 10 and pseudolites 2 are preferably connected by a wireless local area network (WLAN). Alternatively, the monitoring and control station 10 and pseudolites 2 may be connected by a wired network, or any suitable communications link.

The monitoring and control station 10 provides data for navigation messages to be transmitted by the pseudolites 2, emulating the function of a central control facility in a satellite positioning system. The navigation message data is transmitted to each pseudolite 2 over the WLAN, preferably to each pseudolite 2 in turn. The navigation messages are formulated at the pseudolites 2. The monitoring and control station 10 may be remote from the pseudolites 2.

The monitoring and control station 10 monitors the positioning signals transmitted by each pseudolite 2. The monitoring and control station 10 compares the clock timing (bias), clock drift (rate of change of bias) and clock acceleration (rate of change of drift) of each pseudolite with a master clock. The monitoring and control station 10 generates timing correction information for each pseudolite 2, and transmits the timing correction information to each pseudolite 2.

The master clock is preferably the clock in one of the pseudolites, referred to as the master pseudolite. The clocks of all other pseudolites in the system 1 have corrections calculated relative to the master clock, and are referred to as slave clocks. The pseudolites other than the master pseudolite, and having a slave clock, are referred to as slave pseudolites. The master pseudolite preferably has no physical difference to the slave pseudolites, and so the choice of which pseudolite is the master pseudolite is an arbitrary selection. The monitoring and control station 10 does not have a clock which is directly used for timing information. The instantaneous offset of a slave pseudolite time compared to the master pseudolite is determined by comparing pseudorange measurements of the slave pseudolite 2 to the known position of the slave pseudolite 2. This information is filtered and used to derive the timing correction information (clock terms) which is uploaded to each pseudolite and transmitted in the navigation message by each pseudolite 2.

In one embodiment, the slave clocks are synchronised with the master clock, and/or timing correction information is transmitted to each slave pseudolite. The master clock is not synchronised with an external reference, in particular, the master clock is not synchronised with a satellite positioning signal. The master clock will typically deviate from the more accurate external reference over time. A user receiver 5 in area 20 can still obtain an accurate and reliable position from the pseudolite system, since the relative timings of the pseudolite clocks are well defined within the system 1. A minimum of five signal measurements are required to obtain a user navigation solution with unsynchronised system times.

In a preferred embodiment, the monitoring and control station 10 includes an antenna 14 and a reference receiver 16 arranged to receive signals from a satellite and/or from the pseudolites 2. The reference receiver 16 processes the satellite and pseudolite signals, and passes the processed signals to the processing unit 18. The satellite signals are preferably positioning signals, in particular from a global navigation satellite system (GNSS), e.g. a satellite operating in the Galileo positioning system. The monitoring and control station 10 uses the satellite signals as an external timing reference.

In a preferred embodiment, timing information from the external timing reference is sent to the master pseudolite. The master clock is synchronised with the external timing reference, and/or an offset time relating to a difference between the master clock and external timing reference is transmitted with the timing signal. A user receiver 5 can use signals from one or both the pseudolites 2 and the satellite positioning system providing the external timing reference interchangeably. Timing corrections are transmitted by the pseudolite 2 in a timing message to indicate to the user receiver 5 the offset of the transmitting pseudolite time to Pseudolite System Time (based on the master clock). A minimum of four signal measurements are required to obtain a user navigation solution with such synchronised system times.

The user receiver 5 is preferably not part of the pseudolite system 1, but is configured to operate with the system 1. Alternatively, the user receiver 5 may be considered part of the system 1.

The data being received from the reference receiver 16 will include measurements of Pseudorange, Carrier Phase, Doppler, C/No and lock time; data such as raw Navigation symbols and tracking & receiver status. The processing unit 18 provides the mechanism for generating commands for dissemination over the communications link to each pseudolite for passing of navigation parameters and miscellaneous data. Linked with the processing unit 18 is a mechanism for accepting and processing acknowledgements and other health & status data from each of the pseudolites received via the communications link. A user interface is provided to enable inputting of parameters, obtaining system status general system housekeeping as well as functionality for storage of status data on appropriate media. The monitoring and control station processing unit 18 also provides the low-level algorithms for timing within the system 1. The processing unit 18 includes the algorithms for determining timing offsets to be sent to each pseudolite 2.

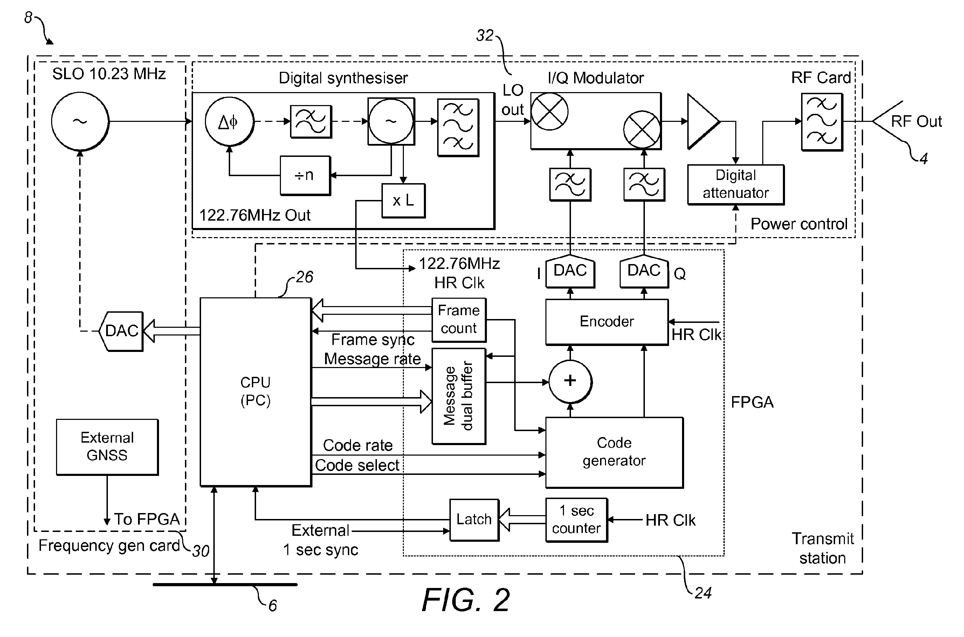

Figure 2 shows a schematic view of the core of processing unit 8 of a pseudolite 2. The processing unit 8 comprises four distinct parts: a timing and frequency generation section 30, a radio frequency (RF) section 32, a real-time firmware section including an FPGA device 24 and control and a "soft real-time" software section 26 hosted on a central processing unit (CPU). It is considered construction of such a processing unit 8 would be possible for a person skilled in the art.

The pseudolite transmission is based on a single stage single sideband up-conversion process, which can consistently deliver high spectral performance. The single stage single sideband output is generated by means of a single chip complex up-converter. This device incorporates two single stage double sideband suppressed carrier mixers whose local oscillators are in phase quadrature. The baseband input signals, also in phase quadrature, are up-converted by these mixers. Their outputs are combined to produce either an upper or lower sideband signal depending on the lead/lag relationship between the baseband inputs. The remainder of the circuitry is concerned with the creation and control of these baseband signals which will maximize the up-conversion process.

The pseudolite transmissions in the system 1 are identical in terms of frequency and modulation to Galileo satellite transmissions. The transmissions comprise two pairs of In-phase and Quadrature (I&Q) components referred to as E5a and E5b, which are AltBOC modulated onto an RF carrier centred at 1191.795 MHz.

The transmissions are modulated onto a pseudo-random number (PRN) code, which is a pre-determined code unique to each pseudolite. The PRN codes comprise 10230 primary code chips.

The pseudolite transmissions include the following message types:
- Almanac Message
- Ephemeris Message
- Timing Message
- Null message Type
- GPS Offset Message Type, and
- Communications Message

The Almanac message indicates to a user receiver 5 what pseudolites are available, as identified by the PRN code. This information is needed for the acquisition of the signal by the receiver 5.

The Ephemeris message is needed to indicate the precise position of the Pseudolite to the user receiver 5.

The Timing Message provides the precise time of the transmission, and clock terms (bias, drift, acceleration) to compute timing corrections.

For interoperability with GNSS systems, and in this case for interoperability to GPS, the GPS Offset Message is provided which gives information about the offset between pseudolite system time and the GPS time.

Null message type is a placeholder that contains null data and is used to facilitate encapsulation into the GNSS hierarchy such that the hierarchy and structure remains intact.

The Communications Message according to the present invention is a specific message type used to transmit non-navigation data to the end user. This message contains no navigation data or positioning data. The Communications Message may include information data that may relate to specific scenarios in the area of the pseudolite system. For example, in a pseudolite system for a port or harbour, the message may direct maritime port activities, e.g. "Large vessel in port, please use mooring number six".

Additionally other data also exists such as: Service parameters which are needed to identify the set of navigation data and indicators of the signal health. These parameters are contained in all other message types and therefore no separate message type is needed.

An example format of each of these message types is outlined below:

### Almanac Message Type

This message has a maximum update rate of typically 1 every 5mins. The Almanac message is a fixed size and carries Almanac data for a maximum of 10 pseudolites. Any unused blocks within the message are indicated by the use of a PRN code (Code Number) of 0 and the remaining data in the block are filled with 0's.

Known almanac messages for a GNSS include approximate position data for each satellite, in the form of orbit parameters. The approximate position data allows the user receiver 5 to calculate which satellites are visible. The user receiver 5 uses the PRN codes of the visible receivers to demodulate the satellite transmissions.

In the present invention, approximate position or orbit data is not included in the almanac message. The almanac message is therefore substantially reduced in size. The almanac message includes the unique PRN identification number (code number) for all of the pseudolites in the system 1. The same almanac is transmitted by all the pseudolites 2 in the system 1, such that identifiers for identifying the PRN codes of all the pseudolites 2 are transmitted by all the pseudolites 2. The PRN code number is preferably included as a 6-bit identifier at the start of the entry for each pseudolite. The present invention will continue to refer to the message providing the PRN code numbers as the almanac, although the present almanac is a modification of a known almanac. The modified almanac described may alternatively be termed the "configuration message".

The almanac also includes information on the status of each pseudolite. In particular, the almanac includes a "Health" identifier for whether each pseudolite (PSL) is able to be used or should be ignored, e.g. because the accuracy of transmissions has fallen below a pre-determined threshold. The almanac may also include an identifier indicating whether a pseudolite 2 has been selected as out of use, and therefore should not be used. A "Signal Health Status Bits" identifier identifies the health or quality of the pseudolite transmission, e.g. indicating if the transmission quality is reduced by interference or local conditions.

**Table 1 : Almanac Message**

| **Parameter** | **Definition** | **Number of Bits** | **Scale Factor & Units** | **Range** |
|---|---|---|---|---|
| Code Number | PRN Code Number in binary form. | 6 | 1 | 0 - 63 |
| Health | Pseudolite | 2 | -- | 4 states: |
| | Health Status | | | 00: PSL Normal Operation |
| | | | | 01: Undefined |
| | | | | 10: Status Unknown |
| | | | | 11 = Don't use PSL |
| IODa | Issue of Data Almanac | 2 | -- | -- |
| SHSB | Signal Health | 2 | -- | 4 states: |
| | Status bits | | | 00 = Signal OK |
| | | | | 01 = Signal Not OK |
| | | | | 10 = Signal will be out of service |
| | | | | 11 = Signal component under Test |
| SISA | Signal-In-Space Accuracy | 8 | 10 | 0.0 to 25.5 |
| **Total** | | **20 * 10 PSLs** | | Always transmit 10 Pseudolites |
| t₀ₐ | Almanac Reference Time *(Note1)* | 8 | 0.000277' | Seconds |
| WNa | Almanac Reference Week Number *(Note1)* | 8 | 1 week | -- |
| | **Total** | **16** | | |

| | | | | |
|---|---|---|---|---|
| *Note 1*: *Time that Almanac is valid from* | | | | |

### Ephemeris Message Type

This message has a maximum update rate of typically 1 every 5mins. The Ephemeris message includes precise location information for the transmitting pseudolite. Each pseudolite transmits precise location information on its position for use by the user receiver 5. The pseudolite transmission includes only precise location information for the transmitting pseudolite 2, and not for any other pseudolites 2 in the system 1. The Ephemeris message is the only part of the transmission which comprises location information, since coarse location information is not included in the almanac. The modified Ephemeris message described may alternatively be termed the "precise location message".

Known GNSS satellites use the Keplerian Coordinate System to define pseudolite position. In the present invention, the Ephemeris message specifies precise location in a Cartesian coordinate system, in particular, in a Earth Centred Earth Fixed Coordinate System. The Earth Centred Earth Fixed (ECEF) Coordinate System defines the position of the fixed pseudolites accurately and concisely, reducing the length of the ephemeris message and thus reducing transmission time.

**Table 2: Ephemeris Message**

| **Parameter** | **Definition** | **Number of Bits** | **Scale Factor & Units** | **Range** |
|---|---|---|---|---|
| ECEF X | Defines the PSL position ECEF X coordinate | 32 | 200 | +/- 10737418.24 |
| ECEF Y | Defines the PSL position ECEF Y coordinate | 32 | 200 | +/- 10737418.24 |
| ECEF Z | Defines the PSL position ECEF Z coordinate | 32 | 200 | +/- 10737418.24 |
| Code Number | PRN Code Number in binary form. | 6 | 1 | 0 - 63 |
| PSL ID (4 Alphanumeric) | 4 7-bit ASCII Alphanumeric characters for naming the PSL e.g. PSL1 | 28 | -- | -- |
| Health | Pseudolite | 2 | -- | 4 states: |
| | Health Status | | | 00: PSL |
| | | | | Normal Op |
| | | | | 01: Undefined |
| | | | | 10: Status Unknown |
| | | | | 11 = Don't use PSL |
| IODe | Issue of Data Ephemeris | 2 | -- | -- |
| SHSB | Signal Health | 2 | -- | 4 states: |
| | Status bits | | | 00 = Signal OK |
| | | | | 01 = Signal Not OK |
| | | | | 10 = Signal will be out of service |
| | | | | 11 = Signal component under Test |
| SISA | Signal-In-Space Accuracy | 8 | 10 | 0.0 to 25.5 |
| t₀ₑ | Ephemeris Reference Time (*Note1*) | 16 | 0.01666' | seconds |
| WNe | Ephemeris Reference Week Number (*Note1*) | 8 | 1 week | -- |
| **Total** | | **168** | | |

| | | | | |
|---|---|---|---|---|
| *Note 1*: *Time that Ephemeris is valid from* | | | | |

### Timing Message Type

This message has a maximum update rate of typically once every 50 seconds. It contains the necessary timing information to ensure a single pseudolite 2 can maintain its timing synchronisation with system time. System time is either a reference GNSS system time (e.g. GPS or EGNOS), or pseudolite system time when synchronised as part of an array of pseudolites or a network of pseudolites. Preferably, pseudolite system time is maintained by an internal clock of a pseudolite 2 in the system 1, which is designated as the master pseudolite. The internal clock of the master pseudolite provides a reference time. Clock corrections may be included in the timing message transmitted by each pseudolite, defining how the clock of each pseudolite differs from the master pseudolite reference time. Clock corrections may also or alternatively be transmitted in the timing message defining a timing offset between the transmitting pseudolite clock and an external reference time, e.g. provided by a clock external to the system 1 such as provided by a satellite signal.

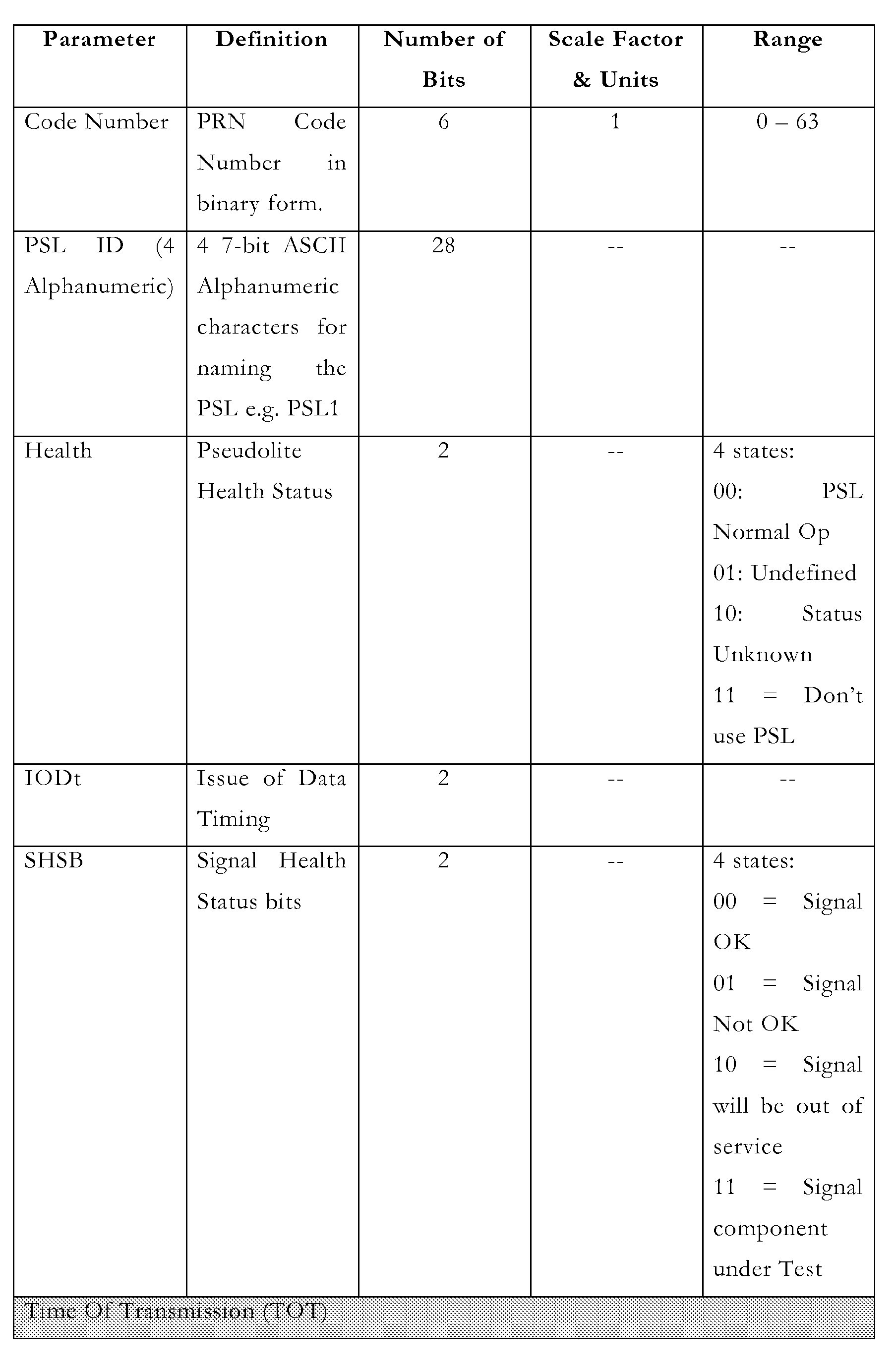

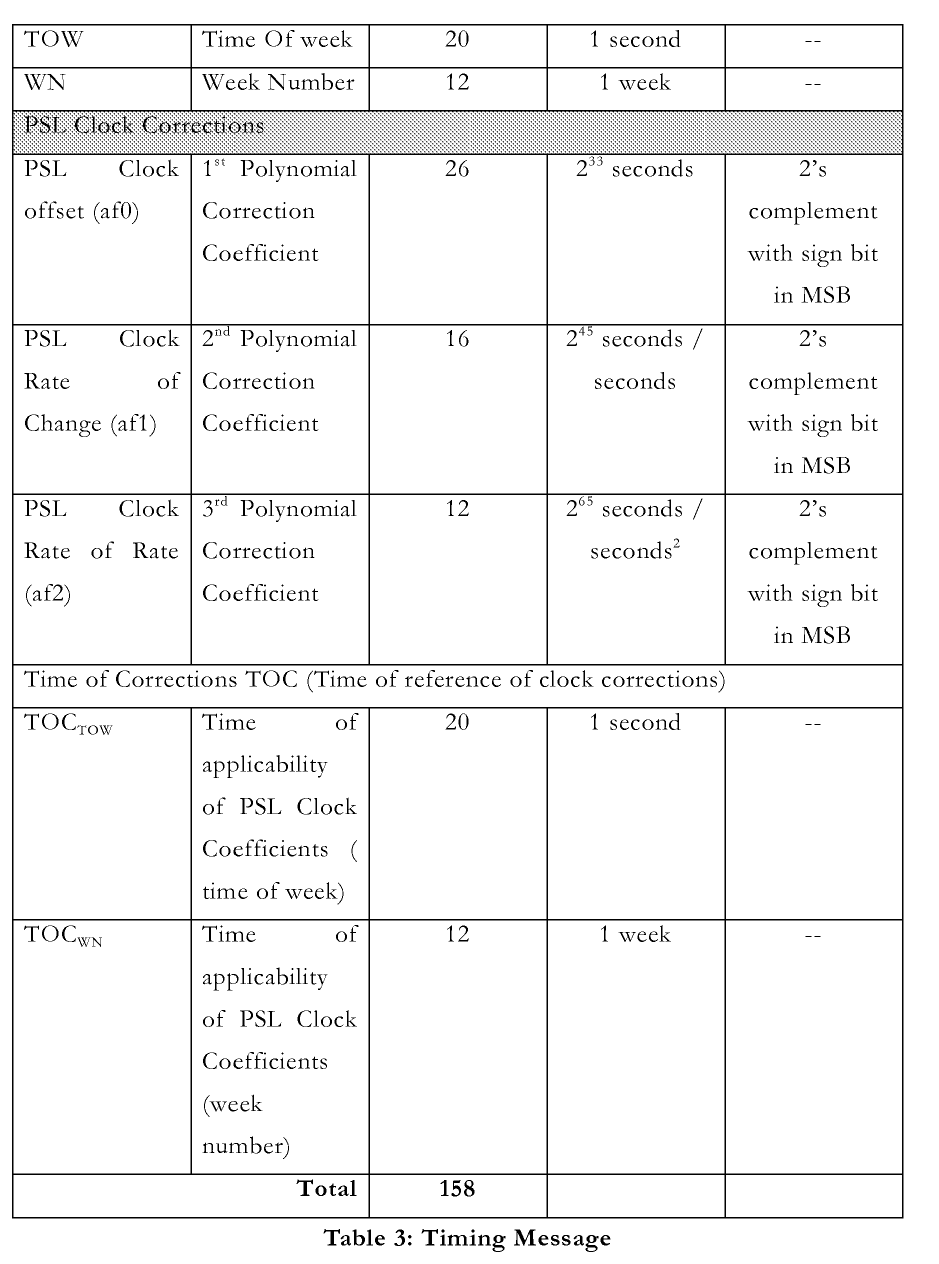

### PSL/GPS Time Offset Message Type

This message has a maximum update rate of typically once every 50 seconds and contains the necessary data to ensure that the Pseudolite can maintain synchronisation with GPS to ensure interoperability. In particular, the time offset message includes a time offset (bias, and optionally drift and acceleration) by which the pseudolite system time, and/or the transmitting pseudolite time, differs from an external reference time.

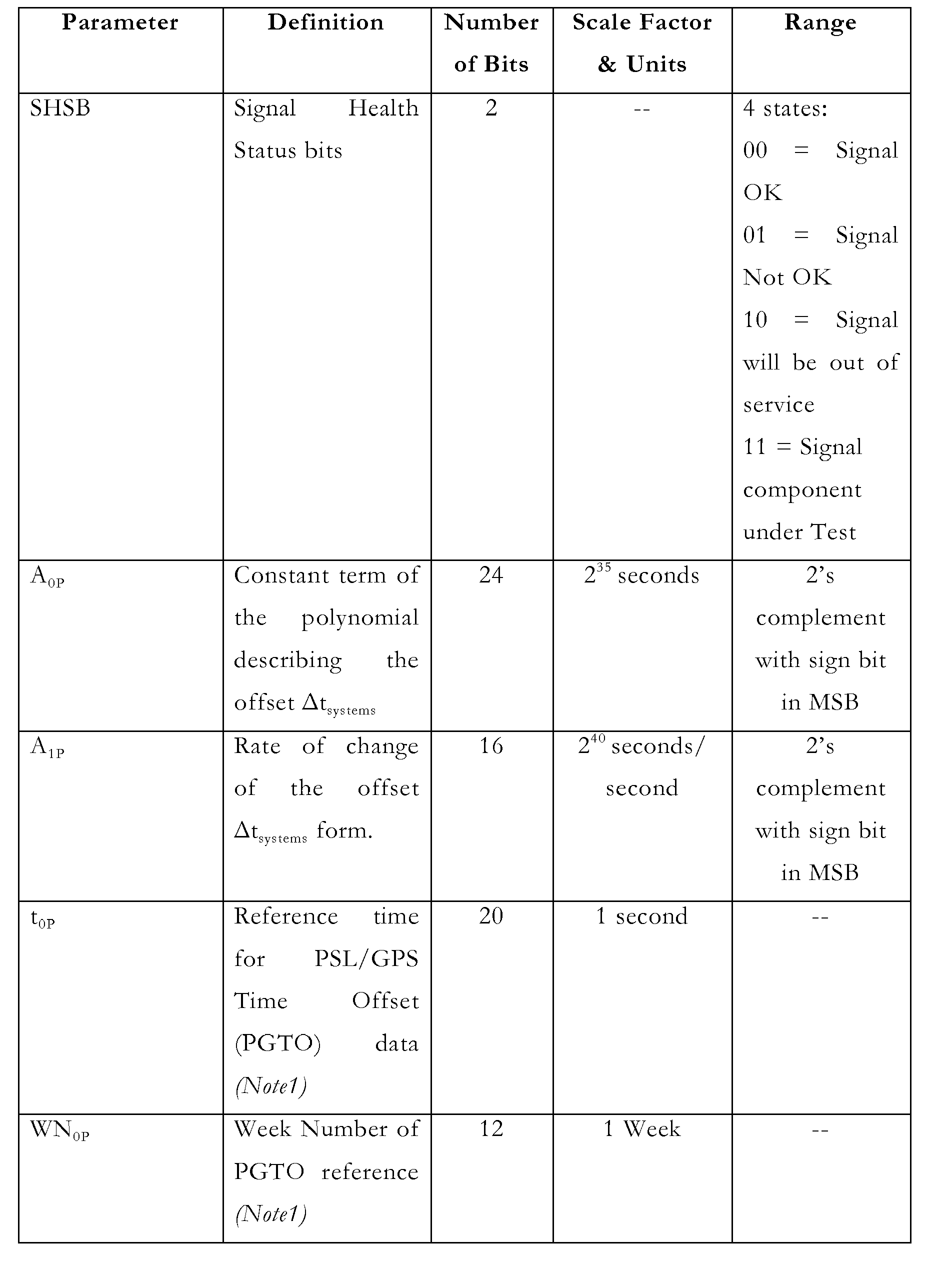

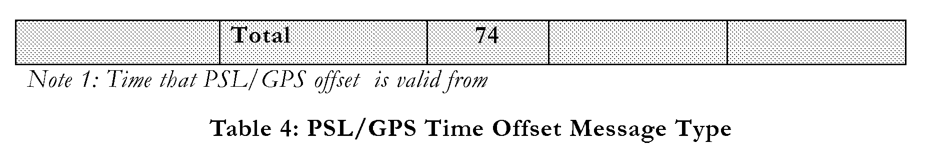

### Null Message Type

An example Null message type is outlined below. The message type is used to fill the remaining space within a GNSS Framing hierarchy and follows the same encapsulation process as all other message types.

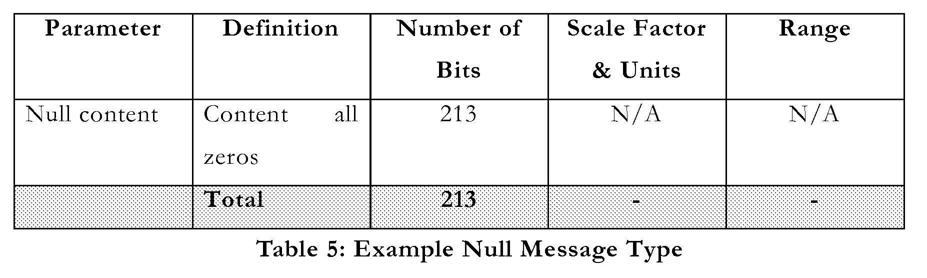

### Communications Message Type

This message data is encapsulated into the Navigation Data payload section of the Navigation message frames in an asynchronous manner , but contains no navigation data within it.

The communications message type, or non-navigation data message type, is defined to be incorporated alongside the pseudolite navigation message types. These types are used to cater for additional information that may be required by users of the system but will include data which is not seen as necessarily part of the position, velocity and time information required for navigation purposes. Examples of which could be to make users aware of unusual activity within the environment. For maritime environments it could be used for example for alerting users of the system that larger than usual vessels are approaching from certain directions. The message is detailed below:

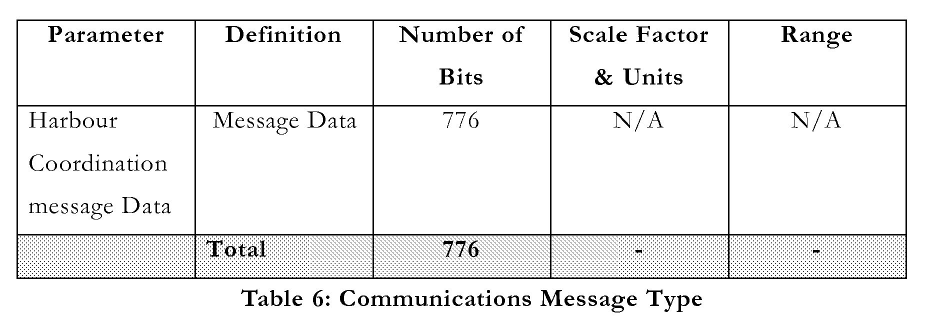

The communications message design conforms to GNSS standards. Below are details of the use of Pseudolite messages included in the GIOVE-B Signal-In-Space Interface Control, as detailed in GIOVE-B Signal-In-Space Interface Specification Draft 0, 23 May 2006.

The specific implementation example of the invention outlined within this proposal is based upon the transmission of Pseudolite Navigation data on the Galileo E5 Frequency, and more specifically based upon the GIOVE-B Signal-In-Space Interface specification.

The E5 frequency is transmitted in such a manner that it can be demodulated as a single AltBOC signal or as two side sub-band signals E5a and E5b.

On E5a the message types have a nominal duration of 10seconds and the format of which is identified in Table 7

**Table 7: E5a Message Frame Structure**

| **Parameter** | **FRMCNT** | **SNF** | **NAV DATA** | **CRC** | **TAIL** |
|---|---|---|---|---|---|
| **Number of Bits** | 6 | 3 | 217 | 12 | 6 |

The E5b message types shall have a nominal duration of 1 second and has the format identified in Table 8.

**Table 8: E5b Message Frame Structure**

| **Parameter** | **INT ALERT** | **FRMCNT** | **SNF** | **NAV DATA** | **INT DATA** | **CRC** | **TAIL** |
|---|---|---|---|---|---|---|---|
| **Number of Bits** | 1 | 10 | 3 | 64 | 24 | 12 | 6 |

The parameters given in both tables above have the following meaning and nominal values (where appropriate):
*INT ALERT Defines whether the message is an integrity alert message. N*/*A for E5a Channel*
*FRMCNT*: *Number of frames processed for the given message type. Messages can be carried over a number of frames.*
*SNF: The Satellite Navigation Field is an optional field which provides a cross check that the Issue of Data* (*IOD*) *remains relevant for the set of transmissions. This data is optional, and may set to an arbitrary value e.g. 101*
*NAV DATA: Pseudolite Navigation* / *Pseudolite Non Navigation Message Data*
*INT DATA: Integrity alert data N*/*A for E5a data.*
*CRC*: *12 bit CRC as defined in the following paragrapbs.*
*Tail*: *6 bits - set to 0.*

Additionally each frame shall start with a synchronisation field, which contains a fixed synchronisation pattern (unique word), allowing the user receiver 5 to achieve synchronisation to the frame boundary. This synchronisation pattern is applied as un-encoded data symbols at the Pseudolite Station and is applied following the encapsulation of the frames shown above.

For the E5 channel components the following synchronisation patterns shall be used.

**Table 9: Navigation & Non Navigation Messages Synchronisation Pattern**

| **Channel** | **Message Type** | **Number of Symbols** | **Frame Bit Allocation** | **Binary Pattern** |
|---|---|---|---|---|
| E5a | N/A | 12 | 6 | 101101110000 |
| E5b | PSL Navigation Data | 10 | 5 | 0101100000 |
| | PSL Non Navigation Data | 10 | 5 | 0101100000 |

The transmission of Complete Navigation / Non Navigation messages (as will be shown later) in some cases will span a number of frames and because of this a "Message Type" field is prepended to the NAV DATA portion of the E5a / E5b frame structure. This ensures that the NAV DATA sections of each frame can be stored / processed with previous frames of data of that type.

### Message Processing

The Pseudolite messages outlined above are encapsulated in the same manner as standard GNSS message types. Prior to modulation onto the E5 frequency the Pseudolite builds each frame according to a defined process to ensure the data fits into the required frame format outlined for GIOVE-B specification. This process is outlined below (Note that detailed descriptions of these underlying processes are not described here and can be found in the associated reference documentation "Galileo Signal-In-Space Interface Control Document, GSTBv2 (GIOVE-B) Navigation Signal-In-Space ICD ):
1. Assemble the Navigation / Non Navigation Data bits
2. Calculate and add Checksum field
3. Add tail bits field (6 bits according to the FEC encoding process)
4. FEC encodes data bits into symbols, doubling number of bits.
5. Interleave the FEC page symbols using a block interleaver with N columns (where data are written) and k rows (where data are read).
6. Add synchronisation field

Thus on receipt of the data a user receiver 5 (User Terminal) will perform the following tasks:
1. Detect synchronisation pattern
2. De-interleave frame symbols.
3. FEC decodes frame symbols into data bits.
4. Calculate and compare received checksum
5. Extract information from frame bits

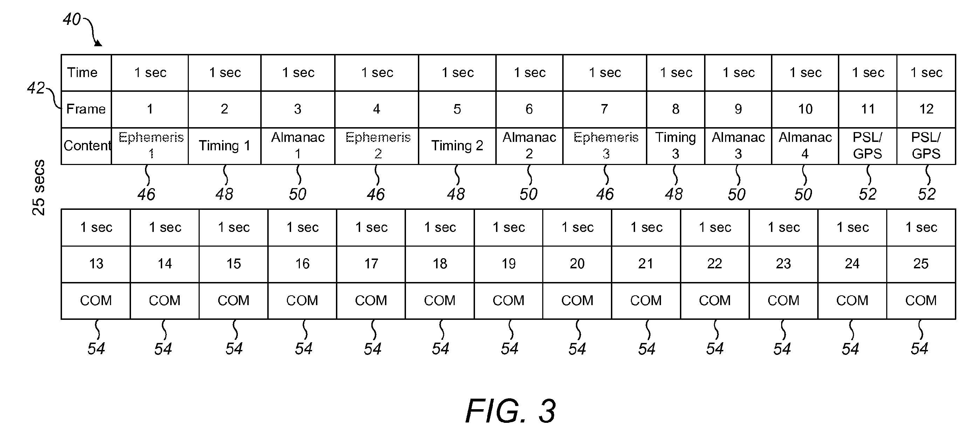

Figure 3 shows a navigation message structure transmitted by the pseudolites 2, according to a preferred embodiment of the present invention. The positioning data transmitted by the pseudolites 2 is transmitted in a series of super frames 40 which encapsulate navigation messages as navigation frames 42. The navigation messages may include one or more frames of ephemeris data 46, timing data 48 and almanac data 50. The almanac data 50 forms an almanac as described above, which does not include conventional coarse location information for the pseudolites. The almanac data 50 therefore has a reduced length compared to a known almanac format.

Preferably, the super frame 40 is formed of a plurality of frames 42 of equal length, preferably 25 frames of 1 second duration each. The super frame 40 has three Ephemeris frames 46 labelled Ephemeris1, Ephemeris2 and Ephemeris3. The super frame 40 has three timing frames 48, labelled Timing1, Timing2 and Timing3. The super frame 40 has four Almanac frames 48 labelled Almanac1, Almanac2, Almanac3 and Almanac4. The super frame 40 has different navigation frame types 46,48,50 interlocking. The super frame 40 further comprises two pseudolite/GPS offset frames 52.

The majority of frames 46,48,50 of each navigation message, or type of data (almanac, timing, ephemeris), are not located consecutively in the super frame. At least two of the frames 46,48,50 of each type are separated, with frames 46,48,50 of another type interposed. At least some of the frames 46,48,50 of ephemeris data, timing data, almanac data can be considered as interlocking or alternating in each super frame. The example shown in Figure 3 has two consecutive frames 50 of almanac data, however, the majority of the frames 46,48,50 of each type are separated by a frame of another type of positioning data.

The navigation frames 42 include data which is directly used by the user receiver 5 to determine position. In particular, timing data informs the user receiver 5 the precise time at which the transmission was broadcast, and the ephemeris data provides the precise location of the transmitting pseudolite. From this information, the user receiver 5 can triangulate position. The navigation messages also include ancillary data relating to the positioning function of the pseudolite system 1, for example, information on the status of the pseudolites, PRN code number, accuracy data and other information on the pseudolites and timing functions. The navigation messages also include data to ensure transmission of the data, such as headers and error correction codes, as is known in the art. All such data is termed positioning data, as part of the navigation messages, since such data relates to the operation of the positioning function of the pseudolite system 1 and user receiver 5.

The super frame 40 may also include one or more pseudolite/GPS offset frames 52. A super frame 40 for channel E5b is shown in Figure 3.

The super frames 40 also encapsulate non-navigation messages, which may be split into non-navigation frames 54. The encapsulated non-navigation messages and frames 54 encode a communications message, which is intended to be delivered to a user of the receiver 5. The communications message is not related to the primary positioning function of the pseudolite system 1, and will be described in more detail below.

The non-navigation messages 54 and frames are located at the end of the super frame. The non-navigation messages and frames are located in a super frame 40 as a series of consecutive frames. The frames comprising communications message data in a super frame are arranged as a continuous series of frames. The super frame 40 has thirteen non-navigation frames 54 containing one or more communication messages. Preferably, when a communications message is sent, between 25% and 75% of a super frame is allocated to frames configured to comprise non-navigation data (message data), and preferably between 40% and 60% of a said super frame is allocated to message data. The proportion of a super frame allocated to non-navigation data or null data is the same in each super frame transmitted.

The arrangement of non-navigation messages therefore differs from the navigation frames, which have the different types interlocking. All the frames fit into the standard GIOVE-B framing structure. A super frame for the E5a Channel has a period of 50seconds. For the E5b Channel the super frame is 25 seconds in length.

The communications message is decoded and output by the user receiver 5, such that the communications message is received by the user. The communications message is preferably a message formed of alphanumeric characters, which can be displayed and read by a user of the user receiver 5. The communications message may be displayed on a screen of the user receiver 5. Alternatively, the communications message may be audibly played by a speaker of the user receiver 5. The communications message is preferably a message providing human understandable instructions or information. For example, if the pseudolite system 1 is arranged around a port or harbour, the communications message may relate to instructions or information for a vessel navigating or docking in the port or harbour. In particular, the communications message may be a message such as "Large vessel in port, please use mooring number six" or other navigation instruction. Although such a communications message relates to navigation and positioning of the user, the communications message is not related to the primary function of the pseudolite system 1 of determining the current position of the user receiver 5. Alternatively, the communications message may relate, for example, to weather conditions, nearby vehicles (vessels), or instructions to move or stop in a particular manner.

The communications message may be manually entered at the monitoring and control station 10, and transmitted to the pseudolites by the communications link prior to the super frame in which the communications message will be broadcast. Non-navigation messages 54 and frames are then appended to space at the end of the next generated super frame 40, instead of the null frames. When no communications message is to be transmitted, null frames are included in the super frame 40 instead of the Non-navigation frames 54. Preferably, each super frame contains a pre-determined number of null frames when no communications message is being transmitted. Some or all of the null frames are replaced by communications message frames when a communications message is being transmitted by a pseudolite. The Non-navigation messages and frames including the communications message are then transmitted by all the pseudolites, along with the usual navigation data, in the next super frame.

The pseudolites 2 preferably broadcast at the E5 frequency as two side sub-band signals E5a and E5b. Navigation data (ephemeris data, timing data and almanac data) used by the user receiver 5 to determine position is transmitted over both side sub-band signals E5a and E5b. The Non-navigation data (communications message) is transmitted over only one of the side sub-band signals E5a and E5b. Preferably, the communications message is only transmitted as an E5b signal. Therefore, the E5a signal carries only navigation data and the E5b signal carries both navigation and non-navigation data.

It has been described that frames of a type of positioning data are separated by a frame of a different type of positioning data within said super frame Alternatively, frames of Ephemeris data, Almanac data and timing data may be arranged in a super frame such that frames of the same type of positioning data are consecutive, and not alternating or split around another type of positioning data.

Any of the features described may be used in combination with any other feature from any embodiment. Any of the features may form the subject of an invention, independently of any other feature.

## Claims

1. A positioning system comprising:
a plurality of pseudolites each comprising a transmitter and configured to broadcast a transmission, the transmission including:
positioning data usable by a receiver to calculate position; and
communications message data comprising information to be output to a user of the receiver, wherein the communications message data is not related to calculating position.

2. The positioning system as claimed in claim 1 wherein the transmission is formed by a series of super frames, wherein the positioning data is arranged in frames within the super frames, and
wherein at least one of said super frames is configured to include the communications message data arranged in at least one frame.

3. The positioning system as claimed in claim 2 wherein the positioning data comprises at least two of Ephemeris data, Almanac data and timing data, defining different types of positioning data,
wherein frames of a type of positioning data are separated by a frame of a different type of positioning data within said super frame; and
the frames comprising communications message data in a super frame are arranged as a continuous series of frames.

4. The positioning system as claimed in claim 2 or 3 wherein between 25% and 75% of a said super frame is allocated to frames comprising communications message data, and preferably between 40% and 60% of a said super frame is allocated to communications message data.

5. The positioning system as claimed in any one of the preceding claims wherein the pseudolites are configured to broadcast the transmission as two side sub-band signals, wherein the communications message data is transmitted on only one of the side sub-band signals.

6. The positioning system as claimed in claim 5 wherein a first side sub-band signal comprises positioning data and no communications message data, and the second side sub-band signal comprises positioning data and communications message data.

7. The positioning system as claimed in claim 6 wherein the transmission is on a Galileo E5 frequency based on the GIOVE-B Signal-In-Space Interface Specification Draft 0, 23 May 2006, and the first side sub-band signal is an E5a signal, and the second side sub-band signal is an E5b signal.

8. The positioning system as claimed in any one of the preceding claims further comprising a control station connected to the plurality of pseudolites by a communications link, wherein the message data is transmitted from the control station to each of the pseudolites via the communications link to be broadcast.

9. The positioning system as claimed in any one of the preceding claims wherein the message data includes information assisting in the navigation of a vehicle, and more preferably, includes information relating to the manoeuvring of a vessel in a harbour.

10. The positioning system as claimed in any one of the preceding claims wherein the transmission of each pseudolite comprises timing data defining a timing offset relative to a reference time,
wherein the reference time is provided by an internal clock of one of said pseudolites.

11. The positioning system as claimed in any one of the preceding claims wherein the transmission includes an almanac comprising identifiers for identifying the PRN codes of the pseudolites in the positioning system,
and wherein the almanac does not include location information for determining the approximate location of the pseudolites.

12. A method of transmitting data to a receiver in a positioning system, comprising:
broadcasting transmissions from a plurality of pseudolites, the transmissions including:
positioning data usable by a receiver to calculate position; and
communications message data comprising information to be output to a user of the receiver, wherein the communications message data is not related to calculating position.

13. A positioning system comprising:
a plurality of pseudolites each comprising a transmitter and configured to broadcast a transmission modulated with a pseudorandom (PRN) code;
wherein the transmission includes an almanac comprising identifiers for identifying the PRN codes of the pseudolites in the positioning system,
and wherein the almanac does not include location information for determining the approximate location of the pseudolites.

14. The positioning system as claimed in claim 13 wherein the transmission by a said pseudolite further includes an ephemeris comprising precise location information for determining the precise location of the said pseudolite.

15. The positioning system as claimed in claim 13 or 14 wherein the precise location information uses a Cartesian coordinate system to define the precise location of the pseudolites, and preferably uses an Earth Centred Earth Fixed Coordinate system to define the precise location of the pseudolites.
